# EUROPÄISCHE PATENTANMELDUNG

(11) **EP 2 357 042 A1**
(43) Veröffentlichungstag der Anmeldung: **17.08.2011**
(21) Anmeldenummer: 11154801.2
(22) Anmeldetag: 17.02.2011
(51) Int. Cl.: B05D 1/30, B05D 7/00

(54) **Verfahren zur Herstellung eines Architekturblechelements**

(30) Priorität: 17.02.2010 DE 102010000449
(71) Anmelder: Hydro Aluminium Rolled Products GmbH, 41515 Grevenbroich (DE)
(72) Erfinder: Siemen, Andreas, 41363 Jüchen (DE); Denkmann, Volker, 47906 Kempen (DE); Bögershausen, Dieter, 41515 Grevenbroich (DE); Rösgen, Herbert, 41516 Grevenbroich (DE)
(74) Vertreter: Ziebell, Arnd

(57) **Zusammenfassung**

Die Erfindung betrifft ein Verfahren zur Herstellung eines Architekturbandes oder -bleches aus einem Metallband, insbesondere aus Aluminium oder einer Aluminiumlegierung, sowie eine dazu verwendbare Metallbandbeschichtungsanlage. Die Aufgabe ein prozesssicheres Verfahren für die Herstellung von Architekturbändern oder -blechen aus Metallbändern anzugeben, das höhere Fördergeschwindigkeiten in den Metallbandbeschichtungsanlagen ermöglicht und ein Architekturband oder -blech zur Verfügung zu stellen, das sich durch eine höhere Oberflächenqualität auszeichnet, ist dadurch gelöst worden, dass das Metallband mit mindestens einem ersten Beschichtungsstoff unter Verwendung eines Vorhangverfahrens beschichtet wird, indem der erste Beschichtungsstoff vorhanggleich auf das in Förderrichtung durch eine Metallbandbeschichtungsanlage bewegte Metallband gegossen wird.

## Beschreibung

Die vorliegende Erfindung betrifft ein Verfahren zur Herstellung eines Architekturbandes oder -bleches aus einem Metallband, insbesondere aus Aluminium oder einer Aluminiumlegierung, sowie eine dazu verwendbare Metallbandbeschichtungsanlage. Ebenso betrifft die vorliegende Erfindung ein mit diesem Verfahren herstellbares Architekturband oder -blech.

In der modernen Architektur kommen immer häufiger Architekturbleche zum Einsatz. Mit ihnen werden beispielsweise die Fassaden von Gebäuden verkleidet. Die Architekturbleche müssen dabei zum einen den Witterungseinflüssen dauerhaft standhalten. Daneben steht jedoch vor allem ihr dekorativer Charakter im Vordergrund. Um diesen Anforderungen gerecht zu werden, weisen Architekturbleche üblicherweise eine Beschichtung auf. Gerade wenn Fassaden von Hochhäusern aus mehreren Architekturblechen zusammengesetzt werden, wird dabei auf einen einheitlichen Gesamteindruck und dementsprechend eine gleichförmige Beschichtung sämtlicher zur Verkleidung verwendeter Architekturbleche wertgelegt.

Aus diesem Grund werden heutzutage immer seltener Architekturbleche verwendet, die aus einem zugeschnittenen und umgeformten Metallblech hergestellt worden sind, das erst im Anschluss an die Umformung lackiert worden ist. Die Architekturbleche werden vielmehr aus bereits beschichtetem Metallband, d.h. Architekturbändern, hergestellt.

Die Beschichtung des Metallbandes wird dabei üblicherweise im sogenannten "Coil-Coating"-Verfahren in einer Metallbandbeschichtungsanlage aufgebracht. Beim "Coil-Coating"-Verfahren wird zunächst das als Coil angelieferte Metallband abgewickelt und über Rollen Lackierwalzen zugeführt. Mit den Lackierwalzen wird dann der zur Beschichtung verwendete Lack auf das durch die Metallbandbeschichtungsanlage geförderte Metallband aufgetragen und anschließend in einem Durchlaufofen getrocknet bzw. ausgehärtet. Die Schritte Lackierwalzen und Aushärten werden dabei solange wiederholt, bis bei mehrschichtigen Beschichtungen alle gewünschten Schichten auf das Metallband aufgebracht sind. Das so beschichtete Metallband kann dann entweder wieder zu einem Coil aufgehaspelt oder bereits in Bleche der für die jeweilige Anwendung benötigten Größe geschnitten werden.

Das bekannte Verfahren zur Herstellung von Architekturbändern oder -blechen und die entsprechenden Architekturbänder oder -bleche haben sich in der Praxis grundsätzlich bewährt. Bei hohen Fördergeschwindigkeiten in der Metallbandbeschichtungsanlage kommt es allerdings bei der Auftragung des Lackes mit den Lackierwalzen vermehrt zu einer Schaumbildung und Verlaufsstörungen in der erzeugten Beschichtung. Somit müssen entweder Einschränkungen im Hinblick auf die maximale Beschichtungsrate oder hinsichtlich der Oberflächenqualität der bekannten Architekturbänder oder -bleche in Kauf genommen werden.

Ausgehend von dem voran stehend beschriebenen Stand der Technik lag der Erfindung daher die Aufgabe zugrunde, ein prozesssicheres Verfahren für die Herstellung von Architekturbändern oder -blechen aus Metallbändern anzugeben, das höhere Fördergeschwindigkeiten in den Metallbandbeschichtungsanlagen ermöglicht und ein Architekturband oder -blech zur Verfügung zu stellen, das sich durch eine höhere Oberflächenqualität auszeichnet. Ebenso sollte eine zur Durchführung des Verfahrens geeignete Metallbandbeschichtungsanlage angegeben werden.

Gemäß einer ersten Lehre der Erfindung ist im Hinblick auf das Verfahren die voran stehende Aufgabe dadurch gelöst worden, dass das Metallband mit mindestens einem ersten Beschichtungsstoff unter Verwendung eines Vorhangverfahrens beschichtet wird, indem der erste Beschichtungsstoff vorhanggleich auf das in Förderrichtung durch eine Metallbandbeschichtungsanlage bewegte Metallband gegossen wird. Hierbei wird ein Beschichtungsstoff verwendet, der Strukturgeber in Form von Kunststoffpartikeln enthält.

Bei dem auch als "Curtain-Coating" bekannten Vorhangverfahren wird ein Beschichtungsstoff auf das zu beschichtende Objekt gegossen. Dabei lässt man aus einem sich transversal zur Transportrichtung des Metallbandes erstreckenden Spalt eines Gießkopfes den Beschichtungsstoff derart kontinuierlich ausströmen, dass er vorhanggleich auf das Metallband fällt. Durch die gleichmäßige Bewegung des Metallbandes unter dem ausfließenden Vorhang wird die Oberfläche des Metallbandes gleichmäßig mit dem Beschichtungsstoff benetzt.

Die Oberfläche der Metallbänder kommt bei diesem Verfahren nur mit dem Beschichtungsstoff selbst in Kontakt. Es eignet sich daher insbesondere zur Herstellung von Architekturbändern oder -blechen aus Metallbändern, die eine sehr sensible und empfindliche Oberfläche aufweisen, z.B. Hochglanzaluminiumbänder. Durch das Vorhanggießen kann insbesondere auch eine Beschichtung erzeugt werden, die keine Orientierung aufweist, d.h. die optischen Eigenschaften und die Materialeigenschaften sind in der Beschichtungsebene isotrop und weisen keine Abhängigkeit von der Transportrichtung auf. Zudem lässt sich mit dem Vorhanggießen die Anzahl der Oberflächenfehler der Beschichtung verringern. Schließlich lassen mit dem Vorhanggießen auf besonders einfache Weise Architekturbänder oder -bleche mit einer mehrschichtigen Beschichtung versehen.

Zur besseren Anpassung der Beschichtung an die unterschiedlichen Anforderungen, denen das Architekturband oder -blech genügen muss, sieht eine erste Ausgestaltung des Verfahrens vor, dass der erste Beschichtungsstoff auf ein geprimertes Metallblech gegossen wird. Durch eine Vorbehandlung des Metallbandes, insbesondere mit Hilfe eines Primers oder einer Grundierung kann einerseits die Korrosionsbeständigkeit des Metallbandes und somit des Architekturbandes oder -bleches erhöht werden. Andererseits lässt sich mit dieser Maßnahme auf einfache Weise die Haftung des nachfolgend aufgegossenen ersten Beschichtungsstoffes verbessern. Es ist vorstellbar, dass auch der Primer unter Verwendung eines Vorhangverfahrens aufgebracht wird.

Eine weitere Ausgestaltung der Verfahrens sieht vor, dass ein zweiter Beschichtungsstoff auf das Metallband aufgebracht wird. Der zweite Beschichtungsstoff kann zum Beispiel dazu dienen, den auf das Metallband aufgebrachten Beschichtungsstoff abzudecken und z.B. vor Farbveränderungen durch UV-Belastung zu schützen. Zum Auftragen des zweiten Beschichtungsstoffes lassen sich z.B. die bekannten Lackierwalzenverfahren einsetzen, mit denen auch sehr dünne Beschichtungen noch gleichmäßig aufgetragen werden können. Alternativ lässt sich der zweite Beschichtungsstoff auch auf das Metallband oder die ggf. bereits darauf aufgebrachte Schicht aus dem ersten Beschichtungsstoff aufsprühen. In vergleichbarer Weise lassen sich auch mehr als zwei Beschichtungsstoffe kombinieren.

Es lassen sich der erste und der zweite Beschichtungsstoff auch gleichzeitig oder zeitlich versetzt auf das Metallband aufbringen. Dies wird z.B. durch einen Gießkopf ermöglicht, der zwei übereinander oder hintereinander angeordnete Spalte aufweist, durch die die unterschiedlichen Beschichtungsstoffe ausfließen können und sich dadurch ein doppelschichtiger Vorhang bildet. Dies führt einerseits zu besonders kompakten Abmessungen der Metallbandbeschichtungsanlage. Andererseits werden die Beschichtungsstoffe nass in nass aufgebracht, so dass sie besonders gut aneinander haften und die Dauerbeständigkeit der erzeugten Beschichtung erhöht ist. Zudem ermöglicht eine derartige Vorgehensweise die Verwendung von Zweikomponenten-Beschichtungssystemen, die durch eine chemische Reaktion von einem Matrixstoff mit einem Härter aushärten, da es erst auf dem Metallband zu einer Reaktion kommt. Der Gießkopf selbst kommt nicht mit dem Gemisch aus Matrixstoff und Härter in Kontakt und kann daher nicht verkleben oder in vergleichbarer Weise kontaminiert werden.

Indem mindestens ein Beschichtungsstoff verwendet wird, der Strukturgeber enthält, lassen sich Architekturbänder oder -bleche herstellen, die keine glatte Oberfläche besitzen, sondern eine ausgeprägte Oberflächenstruktur aufweisen. Bei einem Architekturblech, beispielsweise einem Rollladenstab, wird durch die strukturierte Oberfläche ein aneinander Haften der Bleche vermieden. Bei Architekturblechen, die als Fassadenverkleidung verwendet werden, lassen sich mit strukturierten Oberflächen darüber hinaus besondere, dekorativ ansprechende Effekte erzielen.

Gerade bei einem Beschichtungsstoff, der Strukturgeber enthält, zeigen sich darüber hinaus weitere Vorteile durch das Gießen des Beschichtungsstoffes im Vorhangverfahren auf das in Förderrichtung durch die Metallbandbeschichtungsanlage bewegte Metallband. Im Gegensatz zum einleitend beschriebenen Auftragen des Beschichtungsstoffes mit Hilfe von Lackierwalzen werden die Strukturgeber nicht durch den Kontakt von Walze und Metallband orientiert. Sie richten sich vielmehr zufällig aus, so dass sich an der Oberfläche des hergestellten Architekturblechs eine isotrope von der Förderrichtung unabhängige Struktur ausbilden kann. Fassadenverkleidungen aus mehreren derartigen Architekturblechen bieten somit unabhängig von der Ausrichtung der jeweiligen Architekturbleche zueinander einen besonders gleichmäßigen optischen Gesamteindruck.

Als Strukturgeber sind beispielsweise in dem Beschichtungsstoff vorgesehene Festkörperpartikel oder Kunststoffpartikel geeignet. Es ist allerdings auch denkbar als Beschichtungsstoff eine Emulsion aus zwei verschiedenen Flüssigkeiten zu verwenden, die durch eine Entmischung bei der Trocknung und/oder Härtung der Beschichtung eine Oberflächenstruktur erzeugen.

Alternativ oder ergänzend zur Erzeugung einer Oberflächenstruktur rufen die gegebenenfalls in dem Beschichtungsstoff vorgesehenen Festkörperpartikel oder Kunststoffpartikel auch andere Effekte hervor. So bewirken beispielsweise Festkörperpartikel in Form von Metalleffektpigmenten eine auch als "Flop" bezeichnete Änderung des wahrgenommenen Farbtons und/oder der wahrgenommenen Helligkeit der Beschichtung unter verschiedenen Betrachtungswinkeln, also den typischen "Metallic Effekt".

Als Kunststoffpartikel kommen insbesondere solche aus thermoplastischen Werkstoffen, z.B. Polyamid- (PA), Polyethylen- (PE) und/oder Polymethylmethacrylatwerkstoffen (PMMA) in Frage.

Polyamidwerkstoffe besitzen eine gute Chemikalienbeständigkeit und zeichnen sich durch eine hohe Festigkeit, Steifigkeit und Zähigkeit aus. Sie können daher insbesondere auch zu einem erhöhten Verschleißwiderstand beitragen.

Kunststoffpartikel aus Polyethylenwerkstoffen nehmen kaum Wasser auf, mit ihnen kann der Beschichtungsstoff milchigtrüb eingefärbt werden und sie optimieren die Oberflächengleiteigenschaften des Systems, wodurch nachfolgende Umformprozesse signifikant verbessert werden. Sie besitzen eine hohe Beständigkeit gegen Säuren und Laugen.

Kunststoffpartikeln aus Polymethylmethacrylatwerkstoffen sind meist transparent, so dass sie sich dazu eignen, sowohl durchschimmernde Effekte in der Beschichtung zu erzielen als auch eine Struktur in der Oberfläche zu erzeugen.

Bei der Nutzung von Festkörper- und/oder Kunststoffpartikel mit einem Durchmesser von bis zu 100 µm kann eine gute Verarbeitbarkeit des jeweiligen Beschichtungsstoffes beim Gießen im Vorhangverfahren gewährleistet werden. Dabei kommen die voran stehend beschriebenen, durch die Festkörper-und/oder Kunststoffpartikel hervorgerufenen Effekte insbesondere dann besonders zur Geltung, wenn deren Durchmesser mehr als 10 µm beträgt.

Die Erzeugung von einer Beschichtung auf dem Metallband von mehr als 20 µm führt zu einer praxisgerechten Widerstandsfähigkeit gegenüber den typischen Umwelteinflüssen denen das hergestellte Architekturblech unterworfen ist. Architekturbleche mit einer derartigen Dicke der Beschichtung können insbesondere dadurch hergestellt werden, dass mindestens eine der Schichten der Beschichtung mit einer Dicke von mehr als 20 µm erzeugt wird. Damit lässt sich die Anzahl der für eine praxisgerechte Widerstandsfähigkeit notwendigen Beschichtungsvorgänge auf ein Minimum reduzieren, so dass die Architekturbleche mit einem geringeren Aufwand und somit kostengünstiger hergestellt werden können.

Um einer besonders hohe Widerstandsfähigkeit auch bei starker mechanischer Beanspruchung der Architekturbleche gerecht zu werden, kann die Dicke der Beschichtung bzw. der einzelnen Schicht auch auf mehr als 250 µm erhöht werden.

Grundsätzlich lassen sich die Metallbänder im gewalzten Zustand direkt durch Gießen eines ersten Beschichtungsstoffes im Vorhangverfahren auf das Metallband beschichten. Auf einen zusätzliche Kosten verursachenden Reinigungsschritt kann verzichtet werden. Zu einer Kontaminierung des Gießkopfes durch eventuell an dem Metallband haftende Rückstände kommt es dabei nicht. Diese werden vielmehr in den metallbandnahen Bereich der gegossenen Schicht eingebettet und sind an der Oberfläche des hergestellten Architekturbandes nicht mehr oder nur noch geringfügig sichtbar.

Für besonders beständige Architekturbleche ist vor dem Aufbringen des direkt auf das unbeschichtete Metallband aufgebrachten Beschichtungsstoffes allerdings eine Reinigung vorgesehen. Durch die Reinigung kann eine bessere Benetzung des Metallbandes mit dem aufgebrachten Beschichtungsstoff erzielt werden, so dass ein im Vorhanggießverfahren aufgegossener Beschichtungsstoff besser auf dem Metallband haftet.
Insbesondere bei Metallbändern aus Aluminium oder einer Aluminiumlegierung empfiehlt sich darüber hinaus die Durchführung einer Passivierung vor dem Aufbringen einer Beschichtung. Durch die Passivierung wird die Oberfläche des Metallbandes gezielt oxidiert, um das Metallband vor weiterer Korrosion zu schützen. Das Passivierungsmittel wird dabei bevorzugt im sogenannten No-Rinse-Verfahren aufgebracht, d.h. es findet nach dem Aufbringen des Passivierungsmittels keine Spülung des Metallbandes statt. Die Entsorgung der mit dem häufig gesundheitsschädlichen Passivierungsmittel kontaminierten Spülflüssigkeit entfällt auf diese Weise.

Gemäß einer zweiten Lehre der Erfindung ist die oben aufgezeigte Aufgabe durch ein Architekturband oder -blech gelöst worden, welches eine durch Gießen unter Verwendung eines Vorhangverfahrens erzeugte Beschichtung aufweist.

Ein Architekturband oder -blech mit einer durch Gießen im Vorhangverfahren erzeugten Beschichtung zeichnet sich insbesondere dadurch aus, dass die Beschichtung im Vergleich zu mit Lackierwalzen aufgetragenen Beschichtungen keine Orientierung aufweist und demzufolge im Wesentlichen die gleichen Eigenschaften quer und längs zur Transportrichtung aufweist.

Die unterschiedlichen Anforderungen, die gleichzeitig an das Architekturblech gestellt werden, z.B. gute Korrosionsbeständigkeit bei gleichzeitig hohem Glanz, lassen sich insbesondere bei Beschichtungen gewährleisten, die mehrere, insbesondere Nass in Nass aufgebrachte Einzelschichten aufweisen. Nass in nass aufgebrachte Einzelschichten durchdringen sich üblicherweise an ihren Kontaktflächen und haften daher hervorragend aneinander. Dementsprechend ist die Beschichtung auch bei hohen Scherbelastungen, wie sie beispielsweise beim Umformen des Architekturbleches durch Biegen vorgekommen, sehr beständig.

In einer weiteren Ausgestaltung weißt das Architekturblech eine strukturierte Oberfläche auf. Diese führt bei Kontakt zweier Oberflächen zu einer verminderten Haftungen zwischen den korrespondierenden Architekturblechen. Dies gilt insbesondere dann, wenn sich an der strukturierten Oberfläche Kunststoffpartikel aus einem Polyamidwerkstoff finden, der gute Reibungseigenschaften besitzt.

Durch die mit dem Vorhanggießen erzielte fehlende Orientierung der zur Erzeugung der strukturierten Oberfläche genutzten Strukturgeber, hat das Architekturblech mit der strukturierten Oberfläche auch eine besondere ästhetische Wirkung.

Das Architekturblech kann darüber hinaus eine Beschichtung haben, die Festkörperpartikel, insbesondere Metalleffektpigmente, und/oder Kunststoffpartikel, insbesondere aus einem Polyethylen-, Polyamid- oder Polymethylmethacrylatwerkstoff, aufweist. Bezüglich der damit jeweils einhergehenden Vorteile wird auf die Ausführungen zum erfindungsgemäßen Verfahren verwiesen.

Bei dem Architekturblech kann es sich insbesondere um einen Rollladenstab handeln. Rollladenstäbe werden typischerweise aus einem beschichteten Metallblech hergestellt und anschließend derart miteinander verkoppelt, dass sie ausziehbar sind und sich im ausziehbaren Zustand ein Lichtschlitz bildet. Rollladen tragen wesentlich zum optischen Eindruck bei, den ein Gebäude hervorruft. Daher steht auch bei den Rolladenstäben eine möglichst ansprechende Oberfläche im Vordergrund. Um ein Aneinanderhaften im eingerollten Zustand zu vermeiden, weisen Rollladenstäbe häufig Oberflächen mit strukturgebenden Partikeln auf. In dieser Hinsicht macht sich gerade die durch das Vorhangverfahren erzielbare fehlende Orientierung der Beschichtung der Rolladenstäbe besonders vorteilhaft bemerkbar.

Bei Rolladenstäben kommt es insbesondere auch darauf an, dass die einzelnen Rolladenstäbe in hängender Lage auch bei geringstem Gewicht aufeinander gleiten und nicht aneinander kleben bleiben. Diese Anforderung wird beispielsweise durch eine Strukturoberfläche des Architekturbleches in besonderer Weise gefördert. Die Dicke des Metallbleches für Rollladenstäbe beträgt typischerweise zwischen 0,15 mm und 0,4 mm.

Bei dem Architekturblech kann es sich aber auch um ein Deckblatt für einen Verbundwerkstoff handeln. Unter Verbundwerkstoffen sind beispielsweise Sandwichbauelemente zu verstehen, wie sie bei der Errichtung von Leichtbauhallen Verwendung finden. Dabei wird die Steifigkeit des Verbundwerkstoffes durch zwischen den Deckblättern vorhandene Schaum- oder Wabenstrukturen gewährleistet, so dass den Deckblättern in erster Linie die Aufgabe zukommt, für Witterungsbeständigkeit und ein dekoratives Aussehen zu sorgen. Es hat sich bei dem geforderten geringen Gewicht des Verbundwerkstoffs gezeigt, dass eine Metallbanddicke von 0,15 mm bis 0,7 mm besonders geeignet ist.

In dem Fall, dass es sich bei dem Architekturblech um eine Fassadenverkleidung handelt, ist eine Metallbanddicke von 0,4 mm bis zu 2 mm vorteilhaft. Aufgrund der fehlenden Orientierung der Strukturgeber zeichnet sich eine aus einem erfindungsgemäßen Architekturblech gefertigte Fassadenverkleidung durch ein besonders dekoratives Aussehen aus.

Schließlich ist die oben hergeleitete Aufgabe für eine Metallbandbeschichtungsanlage dadurch gelöst worden, dass diese mindestens einen Gießkopf zum Vorhanggießen eines Beschichtungsstoffes auf ein Metallband aufweist. Bezüglich der damit einhergehenden Vorteile wird auf die Ausführungen zum erfindungsgemäßen Verfahren verwiesen. Der Gießkopf einer erfindungsgemäßen Metallbandbeschichtungsanlage ermöglicht das Aufbringen von mehreren Schichten im Nass-in-Nass-Verfahren. Es ist daher nicht zwingend erforderlich zwischen dem Aufbringen einzelner Schichten beispielsweise einen Durchlaufofen zur Trocknung der zuerst aufgebrachten Schicht vorzusehen. Eine erfindungsgemäße Metallbandbeschichtungsanlage bedingt dadurch deutlich geringere Investitionskosten.

Mit einer Metallbandbeschichtungsanlage, die einen Gießkopf zum zeitgleichen oder zeitlich versetzten Aufbringen zweier Beschichtungsstoffe im Vorhangverfahren aufweist, kann dabei ein besonders guter Zusammenhalt der damit erzeugten Schichten sichergestellt werden.

Es gibt nun eine Vielzahl von Möglichkeiten das erfindungsgemäße Verfahren zur Herstellung eines Architekturblechelements, die erfindungsgemäße Metallbandbeschichtungsanlage sowie das erfindungsgemäße Architekturblech auszugestalten und weiterzubilden. Hierzu wird verwiesen einerseits auf die auf die Patentansprüche 1, 11 und 18 rückbezogenen Patentansprüche, andererseits auf die Beschreibung eines Ausführungsbeispiels in Verbindung mit der Zeichnung. In der Zeichnung zeigt schematisch:

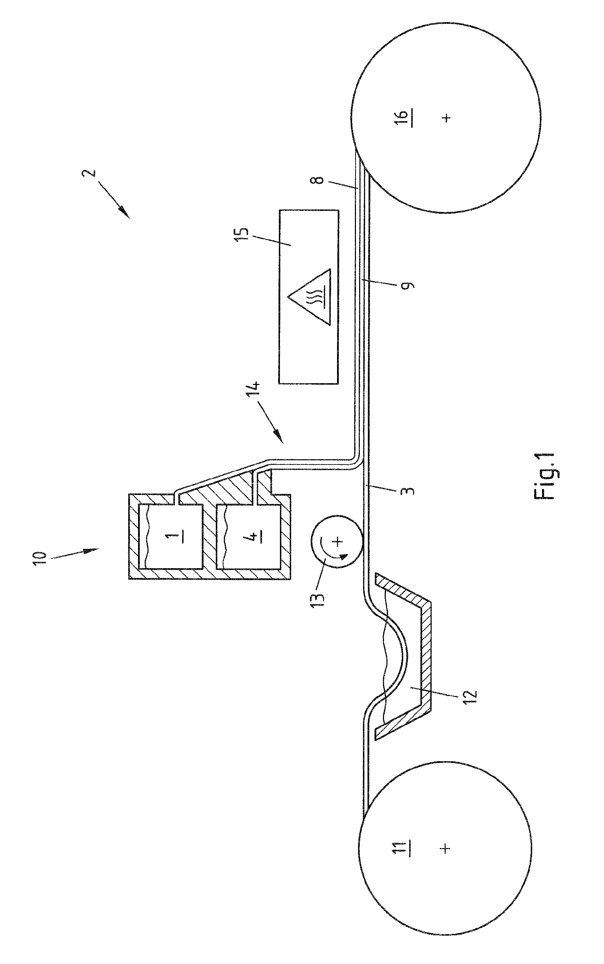

- Fig. 1: ein Ausführungsbeispiel einer zur Durchführung des erfindungsgemäßen Verfahrens geeigneten erfindungsgemäßen Bandbeschichtungsanlage;
- Fig. 2: einen Vergleich zwischen einer Oberfläche eines Architekturblech aus dem Stand der Technik und der Oberfläche eines erfindungsgemäßen Ausführungsbeispieles eines Architekturbleches.
- Fig. 3: ein Ausführungsbeispiel eines erfindungsgemäßen Architekturbleches im Querschnitt;

Das in der Metallbandbeschichtungsanlage 2 zu verarbeitende Metallband 3, das im vorliegenden Fall aus einer Aluminiumlegierung des Typ AA 3xxx besteht, die sich durch eine hohe Festigkeit auszeichnet und gleichzeitig eine gute Umformbarkeit des aus dieser Aluminiumlegierung bestehenden Metallbandes 3 gewährleistet, wird in Form eines Coils 11 angeliefert. Prinzipiell können natürlich auch andere Aluminiumlegierungen mit dem erfindungsgemäßen Verfahren beschichtet werden.

In einer Abwickelvorrichtung wird das Metallband 3 zunächst abgewickelt und wird, z.B. wenn zum vorläufigen Korrosionsschutz während des Transports auf das Metallband 3 Öle aufgebracht worden sind, in einem Tauchbad 12 von Rückständen oder Schmutz befreit. Insbesondere dann, wenn die Metallbandschichtungsanlage 2 sich direkt an eine Walzstraße anschließt und das Metallband 3 im kontinuierlichen Durchlauf in die Metallbandbeschichtungsanlage 2 gelangt, kann auf eine Reinigung allerdings auch verzichtet werden.

Auf die Reinigung des Metallbandes 3 folgt in dem gezeigten Ausführungsbeispiel ein Passivierungsschritt. Dazu wird in bekannter Weise mit einer Passivierungswalze 13 eine Passivierungsflüssigkeit aufgetragen, mit der die Oberfläche des Metallbandes 3 aus einer AA 3xxx-Legierung passiviert wird. Die Passivierung des Metallbandes 3 schützt dieses einerseits vor Korrosion. Andererseits verbessert sie allerdings auch dessen Benetzbarkeit und führt zu einer verbesserten Haftung der im Anschluss aufgebrachten Beschichtung.

Das derart passivierte Metallband 3 wird anschließend im Vorhangverfahren mit einem ersten 1 und einem zweiten 4 Beschichtungsstoff beschichtet. Dazu ist bei der dargestellten Metallbandbeschichtungsanlage 2 ein Gießkopf 10 vorgesehen, mit dem aus zwei Beschichtungsstoffen 1, 4 ein gemeinsamer, doppelschichtiger Vorhang 14 gebildet wird. Das Metallband 3 wird von hier nicht gezeigten Antriebsmitteln kontinuierlich durch diesen kontinuierlich fließenden Vorhang 14 transportiert, so dass sich die Beschichtungsstoffe 1, 4 gleichmäßig auf die Metallbandoberfläche legen.

Das gereinigte und passiviert Metallband 3 kommt dabei zunächst mit einem Primer 4 in Kontakt. Anschließend wird der erste Beschichtungsstoff 1 in Form eines Strukturlackes aufgebracht. Der Primer dient in erster Linie dazu, die Haftung des Strukturlackes auf der passivierten Metallbandoberfläche zu verbessern. Darüber hinaus erhöht er die Widerstandsfähigkeit des hergestellten Architekturbleches 7 gegen Korrosion.

Der Strukturlack 1 bestimmt demgegenüber im Wesentlichen die dekorativen und funktionalen Eigenschaften des in der Metallbandanlage 2 hergestellten Aluminiumbleches 7. Durch ihn werden z.B. dessen Farbe und Glanz eingestellt. Insbesondere dient er jedoch auch zur Erzeugung einer strukturierten Oberfläche und enthält zu diesem Zweck Polyamidpartikel 5.

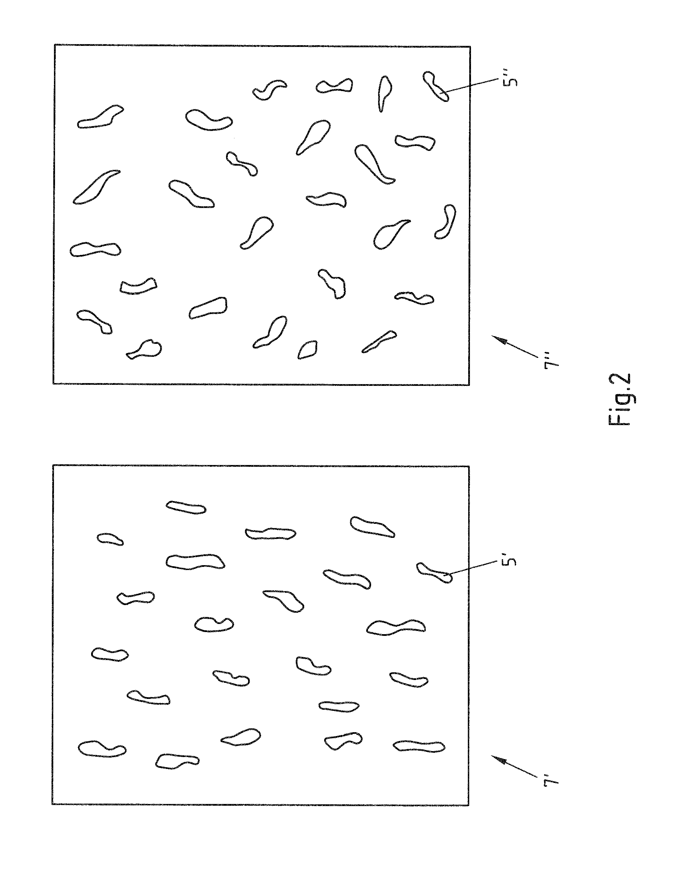

Die Polyamidpartikel 5 haben typischerweise einerseits keine isotropen Abmessungen und sind andererseits auch unterschiedlich groß. Durch das Gießen des Strukturlacks 1 verteilen sich die Polyamidpartikel 5 allerdings sowohl bzgl. der Größe als auch bzgl. der Ausrichtung gleichmäßig in alle Raumrichtungen. Dies wird beispielsweise in der Fig. 2 deutlich, die einen Vergleich zwischen der orientierten Oberfläche eines Architekturbleches 7' und der nicht orientierten Oberfläche eines erfindungsgemäßen Ausführungsbeispiels eines Architekturbleches 7" zeigt. Im Fall des orientierten Architekturbleches sind die Polyamidpartikel 5' im wesentlichen parallel zu den Längskanten des Architekturbleches 7' ausgerichtet. Hingegen ist bei dem erfindungsgemäßen Ausführungsbeispiels eines Architekturbleches 7 " die Achse der größten Ausdehnung Polyamidpartikel 5'' in Bezug auf die Längskanten des Architekturbleches 7 " zufällig, d.h. statistisch verteilt und es ergibt sich ein besonders homogener, dekorativer Gesamteindruck.

Die Nass in Nass aufgebrachte Beschichtung aus Primer 4 und Strukturlack 1 wird dann in einem Durchlaufofen 15 durch Wärmeeinwirkung getrocknet bzw. gehärtet. In Abhängigkeit von der Lackzusammensetzung können allerdings auch andere Methoden, wie z.B. Elektronenstrahl-, UV- oder chemische Vernetzungsverfahren, zur Aushärtung des Lacks verwendet werden.

Insbesondere kann in der schematisch dargestellten Metallbandbeschichtungsanlage 2 auch ein 2-Komponenten-Strukturlack verarbeitet werden. Dabei wird z.B. der zweischichtige Vorhang aus der Harzkomponente eines Strukturlacks und einem zugehörigen Härter gebildet. Die Durchmischung der Komponenten findet dabei erst auf dem Metallband 3 statt, so dass der Gießkopf 10 nicht verkleben kann und der Reinigungsaufwand bei einer derartigen Metallbandbeschichtungsanlage 2 minimiert ist.

Nach dem Aushärten der Beschichtung wird das Architekturblech 7 dann zu einem Coil 16 aufgewickelt und als Coil 16 zu dem jeweiligen Abnehmer transportiert, wo es in die für die vorgesehene Anwendung gebrachte Form gebracht wird.

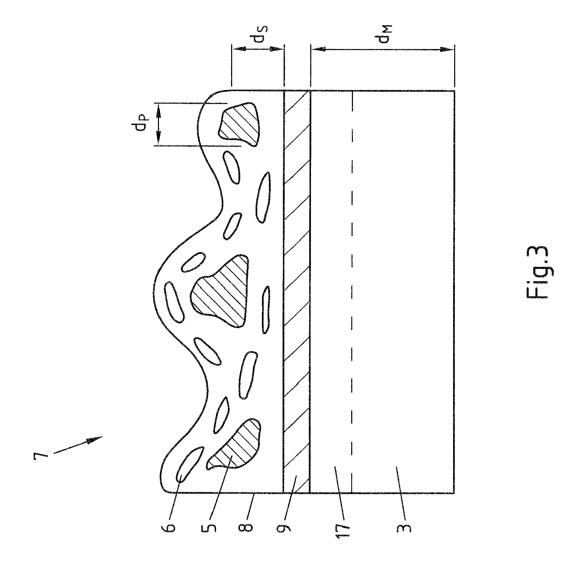

Ein zu dem voran stehend beschriebenen Herstellungsverfahren korrespondierendes Architekturblech 7 mit einer mehrschichtigen Beschichtung ist in der Fig. 3 dargestellt. Das Architekturblech 7 basiert auf einem Metallband 3 aus einer Aluminiumlegierung vom Typ AA 3xxx mit einer vor Korrosion schützende Passivierung im oberflächennahen Bereich 17, wobei die Dicke *d_{M}* des Metallbandes 3 zwischen 0,15 mm und 2 mm liegt.

Darüber hinaus weist das Architekturblech eine mehrschichtige Beschichtung auf, die sich aus einer Primerschicht 9 und einer Strukturlackschicht 8 zusammensetzt. Die Primerschicht 9 dient dabei als Haftvermittler zwischen Metallband 3 und Strukturlackschicht 8. In der Strukturlackschicht 8, die eine Dicke d_{S} von mehr als 50 µm hat, sind sowohl Polyamidpartikel 5 als auch Metalleffektpigmente 6 vorhanden. Die Polyamidpartikel 5, deren Durchmesser d_{P} zwischen 10 µm und 100 µm liegt, bilden dabei als Strukturgeber die Erhebungen der Strukturlackschicht 8 und führen zu einer dekorativen strukturierten Oberfläche.
Gleichzeitig tragen sie aufgrund ihrer Härte zu einer höheren Beständigkeit der Beschichtung gegen abrasive Beanspruchungen bei. Mit den Metalleffektpigmenten 6 wird demgegenüber die Reflektion von eintreffendem Licht beeinflusst und so eine besonders ansprechendes Erscheinungsbild des Architekturblechs 7 gewährleistet.

## Patentansprüche

1. Verfahren zur Herstellung eines Architekturbandes oder -bleches (7) aus einem Metallband (3), wobei das Metallband mit mindestens einem ersten Beschichtungsstoff (1) unter Verwendung eines Vorhangverfahrens beschichtet wird, indem der erste Beschichtungsstoff (1) vorhanggleich auf das in Förderrichtung durch eine Metallbandbeschichtungsanlage bewegte Metallband (3) gegossen wird,
**dadurch gekennzeichnet, dass** mindestens ein Beschichtungsstoff (1), der Strukturgeber enthält, verwendet wird, wobei der Strukturgeber Festkörperpartikel in Form von Kunststoffpartikeln enthält.

2. Verfahren zur Herstellung eines Architekturbandes oder -bleches (7) nach Anspruch 1,
**dadurch gekennzeichnet, dass** das Metallband aus Aluminium oder einer Aluminiumlegierung besteht.

3. Verfahren zur Herstellung eines Architekturbandes oder -bleches (7) nach Anspruch 1 oder 2,
**dadurch gekennzeichnet, dass** ein zweiter Beschichtungsstoff auf das Metallband (3) aufgebracht wird.

4. Verfahren zur Herstellung eines Architekturbandes oder -bleches (7) nach Anspruch 3,
**dadurch gekennzeichnet, dass** der zweite Beschichtungsstoff vor, gleichzeitig mit oder nach dem ersten Beschichtungsstoff (1) auf das Metallband (3) aufgebracht wird.

5. Verfahren zur Herstellung eines Architekturbandes oder -bleches (7) nach einem der Ansprüche 1 bis 4,
**dadurch gekennzeichnet, dass** mindestens ein Beschichtungsstoff (1), der Kunststoffpartikel (5) aus einem Polyamid-, Polyethylen- und/oder Polymethylmethacrylatwerkstoff und/oder Metalleffektpigmente enthält, verwendet wird.

6. Verfahren zur Herstellung eines Architekturbandes oder -bleches (7) nach Anspruch 5,
**dadurch gekennzeichnet, dass** mindestens ein Beschichtungsstoff (1), bei dem der Durchmesser (d_{P}) der Festkörperpartikel und/oder Kunststoffpartikel zwischen 10 µm und 100 µm liegt, verwendet wird.

7. Verfahren zur Herstellung eines Architekturbandes oder -bleches nach einem der Ansprüche 1 bis 6,
**dadurch gekennzeichnet, dass** eine Beschichtung mit einer Dicke (dₛ) von mehr als 20 µm, insbesondere mehr als 250 µm erzeugt wird.

8. Verfahren zur Herstellung eines Architekturbandes oder -bleches (7) nach einem der Ansprüche 1 bis 7,
**dadurch gekennzeichnet, dass** vor dem Aufbringen einer der Beschichtungen (8) das Metallband passiviert wird.

9. Verfahren zur Herstellung eines Architekturbandes oder -bleches (7) nach einem der Ansprüche 1 bis 8,
**dadurch gekennzeichnet, dass** der erste Beschichtungsstoff (1) und/oder zweite Beschichtungsstoff (2) ohne Zwischenspülung nach der Reinigung und/oder Passivierung des Metallbandes (3) aufgebracht wird.

10. Architekturband oder -blech hergestellt mit einem Verfahren nach einem der Ansprüche 1 bis 9
**dadurch gekennzeichnet, dass** es eine durch Gießen unter Verwendung eines Vorhangverfahrens erzeugte strukturierte Oberfläche aufweist, wobei die den Strukturgeber enthaltene Beschichtung Festkörperpartikel in Form von Kunststoffpartikeln enthält.

11. Architekturband oder -blech nach Anspruch 10,
**dadurch gekennzeichnet, dass** die Beschichtung mehrere Schichten (8, 9) aufweist.

12. Architekturband oder -blech nach Anspruch 10 oder 11,
**dadurch gekennzeichnet, dass** die Beschichtung nass in nass aufgebrachte Schichten (8, 9) aufweist.

13. Architekturband oder -blech nach einem der Ansprüche 10 bis 12,
**dadurch gekennzeichnet, dass** die Beschichtung Kunststoffpartikel (5) aus einem Polyethylen-, Polyamid-, und/oder Polymethylmethacrylatwerkstoff und/oder Metalleffektpigmente aufweist.

14. Architekturband oder -blech nach einem der Ansprüche 10 bis 13,
**dadurch gekennzeichnet, dass** die Dicke (dₛ) der Beschichtung oder die Dicke einer einzelnen Schicht (8, 9) mehr als 20 µm, insbesondere mehr als 250 µm, beträgt.

15. Architekturband oder -blech nach einem der Ansprüche 10 bis 14,
**dadurch gekennzeichnet, dass** das Architekturblech eine Fassadenverkleidung, ein Rolladenstab oder ein Deckblatt für einen Verbundwerkstoff ist.

16. Metallbandbeschichtungsanlage, insbesondere zur Durchführung eines Verfahrens nach einem der Ansprüche 1 bis 9,
**dadurch gekennzeichnet, dass** die Metallbandbeschichtungsanlage (2) mindestens einen Gießkopf (10) zum zeitgleichen Aufbringen zweier Beschichtungsstoffe mittels Vorhanggießens auf ein Metallband und ein Tauchbad und/oder eine Passivierungswalze aufweist.
